# EUROPÄISCHE PATENTSCHRIFT

(11) **EP 2 392 292 B1**
(45) Veröffentlichungstag und Bekanntmachung des Hinweises auf die Patenterteilung: **24.07.2013**
(21) Anmeldenummer: 10005827.0
(22) Anmeldetag: 05.06.2010
(51) Int. Cl.: A61C 15/04

(54) **Vorrichtung zur Reinigung von Zahnzwischenräumen**
Device for cleaning spaces between teeth
Dispositif de nettoyage d'espaces inter-dentaires

(43) Veröffentlichungstag der Anmeldung: 07.12.2011
(73) Patentinhaber: Schröder, Ludger, 57462 Olpe Allemagne (DE); Martin, Tobias, 57462 Olpe (DE)
(72) Erfinder: Christine Schröder, 57462 Olpe (DE)
(74) Vertreter: Dörner, Kötter & Kollegen

(56) Entgegenhaltungen:
- DE-A1- 4 241 576
- DE-A1-102007 016 208
- US-A- 3 902 510
- US-A1- 2002 106 607
- US-A1- 2005 000 537

## Beschreibung

Die Erfindung betrifft eine Vorrichtung zur Reinigung von Zahnzwischenräumen nach dem Oberbegriff des Patentanspruchs 1.

Es ist allgemein bekannt, dass konventionelles Putzen der Zähne mittels Zahnbürste zur Entfernung aller eingeschlossenen Speisereste sowie des Zahnbelags unzureichend ist. Zur Ergänzung des Reinigungsvorgangs ist der Einsatz von Zahnseiden oder auch Zahnzwischenraumbürsten empfohlen worden. Die Entfernung von Zahnbelag sowie eingeschlossenen Speiseresten beugt Karies und Parodontoseerkrankungen vor, verbessert die allgemeine Mundhygiene und verhindert die Entstehung von Mundgeruch.

Zur vereinfachten Handhabung der Zahnseide wurden sogenannte "Flosser" entwickelt. Dieser Begriff "Flosser" ist angelehnt an die englischen Wörter "floss" für Zahnseide bzw. "flossing" für Zahnreinigung mit Zahnseide. Ein Flosser weist in der Regel ein Handstück mit einer daran angeordneten Gabel auf, über deren freie Enden ein Zahnseidefaden geführt ist. Die Zahnseide wird mittels des Flossers in die Zahnzwischenräume eingeführt, um die schwer zugänglichen Zahnflächen in diesen Interdentalbereichen durch Hin- und Herbewegung des Zahnseidefadens zu reinigen. Es sind auch motorbetriebene Flosser bekannt, bei denen der Zahnseidefaden zwischen einer Vorratsspule und einer Aufwickelspule in Form einer Vorschubbewegung angetrieben wird, so dass die Zahnseide zwischen den freien Ende der Flossergabel bewegt wird, wobei der Zahnseidefaden zwischen den freien Enden der Flossergabel immer gespannt bleibt. Durch Ausgestaltung der Führung der Zahnseide zwischen unterschiedlichen Spulen kann der Zahnseidefaden dabei in eine vibratorische Bewegung in Form einer Längsschwingung versetzt werden.

Nachteilig an den Flossern der vorbekannten Art ist, dass die zwischen dem freien Ende der Flossergabel gespannte Zahnseide beispielsweise auf Grund von Konkrementen und Speiseresten nur schwer oder gar nicht in die interdentalen oder interimplantären Zwischenräume geführt werden kann. Weiterhin besteht beim Einführen der gespannten Zahnseide in verengte Zahnzwischenräume die Gefahr einer Verletzung des Zahnfleisches, da die Zahnseide mit hohem Druck in die Zahnzwischenräume gepresst werden muss. In diesem Zusammenhang ist festzustellen, dass die Verengung zwischen zwei Zähnen regelmäßig zahnkronenseitig auftritt, wobei der Zahnzwischenraum zahnfleischseitig erweitert ist.

Aus DE 102007 016208 ist ein "Flosser" gemäß dem Oberbegriff von Anspruch 1 bekannt.

Hier will die Erfindung Abhilfe schaffen. Der Erfindung liegt die Aufgabe zu Grunde, eine Vorrichtung zur Reinigung von Zahnzwischenräumen zu schaffen, die eine einfache Einführung der Zahnseide in die Zahnzwischenräume verbunden mit einer gründlichen Reinigung dieser Zahnzwischenräume ermöglicht. Gemäß der Erfindung wird diese Aufgabe durch die Merkmale des kennzeichnenden Teils des Patentanspruchs 1 gelöst.

Mit der Erfindung ist eine Vorrichtung zur Reinigung von Zahnzwischenräumen geschaffen, die eine einfache Einführung der Zahnseide in die Zahnzwischenräume mit nachfolgender gründlicher Reinigung dieser Zahnzwischenräume ermöglicht. Durch das Durchfädeln der Zahnseide durch den Zahnzwischenraum ist eine Behinderung durch kronenseitige Zahnzwischenraumverengungen vermieden. Durch das Fördermodul kann die Zahnseide ohne Druck in Richtung des Zahnfleisches eingeführt werden, wodurch Zahnfleischverletzungen vermieden sind. Anschließend kann das Fördermodul auf zwei Achsen, vorzugsweise einer horizontalen und einer zu dieser orthogonal angeordneten vertikalen Achse verfahren werden, wodurch eine gründliche dreidimensionale Zahnreinigung ermöglicht ist. Unter dem Begriff "Zahnseide" sind nachfolgend auch Abwandlungen flexibler Endlosinterdentalreinigungshilfsmittel wie beispielsweise flexible Endlosinterdentalbürsten zu subsumieren.

In Weiterbildung der Erfindung ist das Greifmittel durch ein zweites Fördermodul gebildet, welches wenigstens zwei beidseitig der zu fördernden Zahnseide angeformte und gegeneinander pressbare Rollen aufweist. Hierdurch ist eine Annahme des durch einen Zahnzwischenraum durchgeführten Zahnseidenendes mit anschließender Verspannung der Zahnseide ermöglicht. Dabei ist vorzugsweise auch das zweite Fördermodul auf wenigstens zwei Achsen verfahrbar, welche vorteilhaft durch eine horizontale und eine zu dieser orthogonalen vertikalen Achse gebildet sind. Durch das Zusammenwirken der Fördermodule der beiden Führungsarme ist eine Führung der Zahnseide in sämtliche Richtungen entlang der beiden benachbarten Zähne ermöglicht. Die hierdurch erzielte dreidimensionale Reinigung ist der manuellen Benutzung eines Zahnseidestücks weitaus überlegen. Dabei ist die Zahnseide über die Vorrichtung wesentlich leichter zu handhaben.

Alternativ oder zusätzlich kann das Greifmittel durch eine Spannzange gebildet sein, mittels der die Zahnseide fixer- und spannbar ist. Die Spannzange kann dabei dem zweiten Fördermodul nachgeordnet oder an Stelle des zweiten Fördermoduls angeordnet sein. Im letztgenannten Fall ist die Spannzange bevorzugt auf wenigstens zwei Achsen verfahrbar ausgebildet.

In weiterer Ausgestaltung der Erfindung ist wenigstens ein Fördermodul mit einem Schwingungserzeuger verbunden, mittels dessen es auf wenigstens einer Achse, vorzugsweise auf einer horizontalen und einer zu dieser orthogonalen vertikalen Achse oszillierbar ist. Durch Oszillieren der gespannten Zahnseide ist die Reinigungswirkung weiter erhöht.

In Weiterbildung der Erfindung gehen die Führungsarme endseitig in einem nach außen sich öffnenden Trichter über, der bevorzugt derart dimensioniert ist, dass er zwei nebeneinander angeordnete Zähne in ihrer Breite etwa hälftig überdeckt und der besonders bevorzugt mit einer elastischen Andruckschicht versehen ist. Hierdurch ist der Arbeitsraum, das heißt der Zahnzwischenraum mit Bereichen der beiden angrenzenden Zähne, beidseitig je Trichter abgrenzbar. Innerhalb der durch die beiden gegenüberliegenden Trichter, welche an die Zähne anpressbar sind, kann dann über die Fördermodule eigenständig eine Zahnreinigung erfolgen.

In Ausgestaltung der Erfindung ist an wenigstens einem Fördermodul eine Hülse zur Durchführung der Zahnseide angeordnet. Hierdurch ist eine gute Ausrichtung eines Zahnseidenendes bewirkt. Die Hülse kann dabei in Art einer Kanüle ausgebildet sein.

Vorteilhaft ist endseitig an der Führungshülse ein Führungskegel angeordnet, durch den die Zahnseide geführt ist. Hierdurch ist die Zahnseide exakt in den gewünschten Bahnen innerhalb des Zahnzwischenraumes positionierbar.

In Weiterbildung der Erfindung ist wenigstens ein Fördermodul mit einer Steuerung versehen, über welche das Fördermodul entlang definierter Bahnen bewegbar ist. Hierdurch ist eine selbsttätige Reinigung eines Zahnzwischenraums ermöglicht.

Bevorzugt ist die Steuerung mit einer Speichereinheit verbunden, in der verschiedene Bewegungsabläufe speicherbar sind. Hierdurch ist je nach zu reinigendem Zahnzwischenraum ein hinterlegter Bewegungsablauf der Zahnseide durchführbar.

Vorteilhaft ist an dem Gehäuse eine Bedieneinheit zur Auswahl eines Bewegungsablaufs angeordnet. Hierdurch ist ein einfacher Wechsel der Bewegungsabläufe durch den Bediener ermöglicht.

In Ausgestaltung der Erfindung sind an wenigstens einem der Führungsarme Mittel zum Schneiden von Zahnseide angeordnet. Hierdurch ist ein einfaches Abtrennen benutzter Zahnseide ermöglicht.

In weiterer Ausgestaltung der Erfindung ist in einem Führungsarm dem Fördermodul vorgeschaltet ein Bündelmodul zur partiellen Versteifung der Zahnseide, beispielsweise durch partielle Benetzung mit Bündelflüssigkeit angeordnet, durch den die Zahnseide durchführbar ist. Unter dem Begriff "Bündelflüssigkeit" ist vorliegend jedwede Flüssigkeit zu subsumieren, welche geeignet ist, den Zusammenhalt der einzelnen Fasern eines Zahnseideendes zu erhöhen. Hierbei kann es sich sowohl um Wasser handeln, wodurch die einzelnen Fasern angefeuchtet werden, weshalb sie besser aneinander haften. Es kann sich auch bevorzugt um einen verstärkten Haftvermittler handeln, welcher im weiteren Verlauf der benetzten Stelle der Zahnseide aushärtet. Auch der Einsatz eines nachhärtenden Wachses ist denkbar. Alternativ kann das Bündelmodul auch eine Wärmeeinheit aufweisen, über die eine Versteifung eines Zahnseidenendes bzw. -abschnitts bewirkt wird.

In weiterer Ausgestaltung der Erfindung umfasst das Bündelmodul zwei diametral zueinander angeordnete Schwämme zur Aufnahme von Bündelflüssigkeit, welche in Abhängigkeit von der Fördergeschwindigkeit der Zahnseide gegeneinander pressbar sind. Hierdurch ist eine gezielte Benetzung einzelner Abschnitte der Zahnseide ermöglicht. Bevorzugt erfolgt jeweils hinter einer solchen benetzten Stelle im weiteren Verlauf die Abtrennung eines gebrauchten Zahnseidestücks. Das nun vorliegende versteifte Zahnseidenende kann nun besonders gut durch einen Zahnzwischenraum geführt werden.

In Weiterbildung der Erfindung ist hinter dem Greifmittel ein Sensor zur Detektion eines aufgenommenen Zahnseideendes angeordnet, der mit der Steuerung verbunden ist. Hierdurch ist eine gezielte Fixierung mit anschließender Spannung der Zahnseide ermöglicht; das Auftreten überlanger Zahnseideenden, welche anschließend zu entsorgen sind, ist so vermieden.

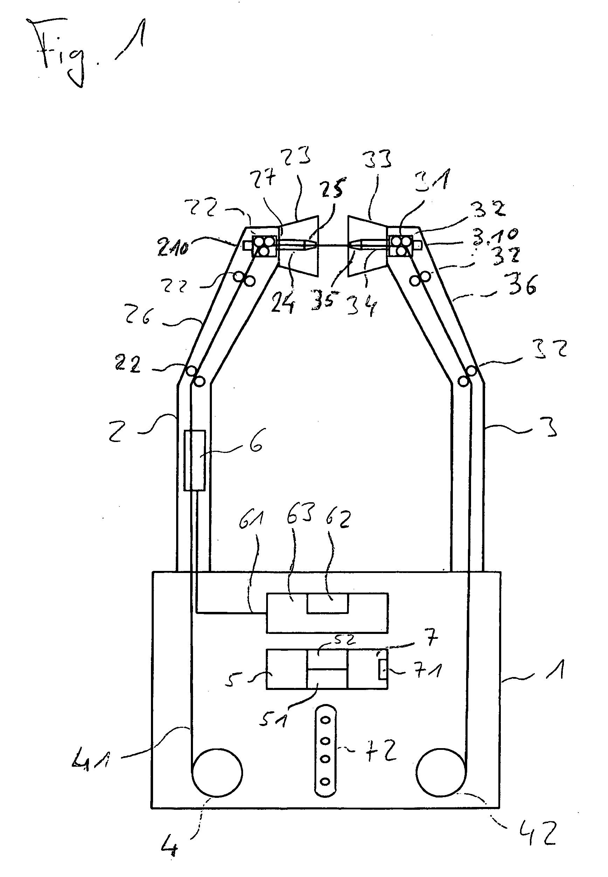

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Die einzige Figur zeigt die schematische Darstellung einer Vorrichtung zur Reinigung von Zahnzwischenräumen.

Die als Ausführungsbeispiel gewählte Vorrichtung zur Reinigung von Zahnzwischenräumen besteht im Wesentlichen aus einem Gehäuse 1, an dem zwei Führungsarme 2, 3 angeordnet sind, die zangenartig zueinander ausgebildet sind. In dem Gehäuse 1 ist ein Zahnseidespender 4 angeordnet. Weiterhin sind in dem Gehäuse 1 ein Elektromotor sowie eine Steuereinheit 7 angeordnet.

Die Führungsarme sind weitgehend hohlzylindrisch ausgeführt und gegeneinander zangenartig abgewinkelt. Zur besseren Reinigung sind die Führungsarme 2, 3 jeweils mit einer verschließbaren Öffnung 26, 36 versehen. Endseitig ist an jedem Führungsarm 2, 3 ein Trichter 23, 33 angeordnet, welcher nach außen sich aufweitend ausgebildet ist. Die Trichter 23, 33 sind vorzugsweise als wechselbare Einmalelemente ausgebildet. Den Trichtern 23, 33 vorgelagert ist innerhalb eines jeden Führungsarms 2, 3 ein Fördermodul 21, 31 zum Transport der Zahnseide 41 angeordnet. Innerhalb der Fördermodule 21, 31 sind beidseitig der zu fördernden Zahnseide 41 gegeneinander pressbare Rollen 22 angeordnet, über welche die Zahnseide 41 förderbar ist.

Die Fördermodule 21, 31 sind jeweils mit einer Verfahr- und Schwingungseinheit 210, 310 verbunden, über die sie in horizontaler sowie in vertikaler Richtung verfahrbar sowie entlang der Längsrichtung der Zahnseide in Schwingung versetzbar sind. An das Fördermodul 21, 31 schließt sich jeweils eine Hülse 24, 34 zur Durchführung der Zahnseide 41 an, an der ein Kegel 25, 35 angeordnet ist, welcher nach außen sich verengend ausgebildet ist. Im Ausführungsbeispiel ist der Kegel 35 zweiteilig ausgebildet, so dass er zur Zuführung der Zahnseide entlang einer horizontalen Linie geöffnet werden kann. Nach Aufnahme der Zahnseide 41 durch das Fördermodul 31 ist der Kegel 35 verschließbar, so dass die Zahnseide 41 über das Fördermodul 31 exakt positionierbar ist. Alternativ ist auch denkbar, hier einen sich in Richtung des die Zahnseide 41 zuführenden Fördermoduls 21 erweiternden Kegel 35 vorzusehen, was jedoch möglicherweise mit einer Verschlechterung der Zahnseideführung bei der Zahnreinigung einhergeht. Auch die Kegel 25, 35 sind vorzugsweise als wechselbare Einmalelemente ausgebildet, welche vorteilhaft mit den Trichtern 23, 33 verbunden sind, sodass sie gemeinsam mit diesen in Form einer Einheit ausgewechselt werden können. Es ist auch denkbar, diese gemeinsam mit einem Teil eines Führungsarms 2, 3 - jedenfalls soweit sie im Einsatz Kontakt mit dem Mundraum haben können - austauschbar zu gestalten.

Innerhalb des Führungsarms 2, in dem die Zahnseide 41 in Richtung des Trichters 23 förderbar ist, ist dem Fördermodul 21 vorgelagert ein Bündelmodul 6 angeordnet. Das Bündelmodul 6 dient der partiellen Benetzung der Zahnseide 41. Hierzu sind in dem Bündelmodul 6 zwei - nicht dargestellte - diametral zueinander angeordnete Schwämme zur Aufnahme von Bündelflüssigkeit angeordnet, welche in Abhängigkeit von der durch das Bündelmodul 6 geförderten Zahnseide 41 gegeneinander pressbar sind. Das Bündelmodul 6 ist über eine Leitung 61 mit einer Pumpe 62 verbunden, welche innerhalb eines Bündelmittelbehälters 63 angeordnet ist.

Die Fördermodule 21, 31 mit ihrer Verfahr- und Schwingungseinheit 210, 310 sind mit der Steuereinheit 7 verbunden, welche über einen Akkumulator 51, der gleichzeitig auch den Motor 5 speist, mit Strom versorgt wird. Der Akkumulator 51 kann über ein integriertes Induktionslademodul 52 aufgeladen werden. Die Ladung erfolgt über ein externes - nicht dargestelltes - Ladegerät, welches bekanntermaßen das Gehäuse 1 und die das in diesem angeordnete Induktionslademodul 52 mit einem oszillierenden elektromagnetischen Wechselfeld beaufschlagt. Die Steuereinheit 7 ist mit einer Speichereinheit 71 versehen, in der unterschiedliche Bewegungsabläufe der Fördermodule 21, 31 speicherbar sind. Die abgespeicherten Bewegungsabläufe können über eine Bedieneinheit 72 angewählt werden, die mit der Steuerung 7 verbunden ist. Der Zahnseidespender 4 ist weitgehend als Spule ausgebildet, auf der ein Zahnseidefaden 41 aufgewickelt ist. Der Zahnseidefaden 41 ist durch das Bündelmodul sowie durch die Fördermodule 21, 31 geführt und mündet in einem Sammelbehältnis 42. Innerhalb der Führungsarme 2, 3 sind mehrere angetriebene und nicht angetriebene Rollen 22, 32 angeordnet, zwischen denen die Zahnseide 41 transportiert wird. Dem Fördermodul 31 nachgeschaltet ist eine Schneidvorrichtung 27 zum Trennen eines verbrauchten Zahnseideabschnitts angeordnet.

Zur Reinigung der Zahnzwischenräume wird die Zahnseide 41 durch über einen Elektromotor 5 angetriebene Förderrollen 21 durch den Führungsarm 2 durch die Hülse 24 bis zum Kegel 25 innerhalb des Trichters 23 gefördert. Dabei ist die Zahnseide 41 durch das Bündelmodul 6 geführt, welches die Zahnseide 41 an definierten Stellen mit Bündelflüssigkeit benetzt. Die Vorrichtung wird derart im Mund positioniert, dass die gegenüberliegend angeordneten Trichter 23, 33 beidseitig eines Zahnzwischenraums an den benachbarten Zähnen zur Anlage kommen. Nachfolgend wird die Zahnseide durch das Fördermodul 21 durch den Kegel 25 durch den Zahnzwischenraum in Richtung des gegenüberliegenden Fördermoduls 31 gefördert, wo das Ende der Zahnseide 41 durch das Fördermodul 21 aufgenommen und gespannt wird. Zum Spannen kann dem Fördermodul 21 vorgelagert zusätzlich eine Spannzange angeordnet sein. Bevorzugt erfolgt das Spannen der Zahnseide 41 jedoch durch entgegengesetzte Förderrichtungen der Fördermodule 21, 31. Das Fördermodul 31 ist mit einem nachgelagerten Berührungssensor versehen, so dass das Zahnseideende detektiert werden kann, worauf eine automatische Fixierung und Spannung der Zahnseide 41 zwischen den Fördermodulen 21, 31 erfolgt. Das Zahnseideende ist zur besseren Durchführbarkeit durch den Zahnzwischenraum an seinem Ende über das Bündelmodul 6 versteift ausgeführt.

Schwingungseinheit 210, 310 verbundenen Fördermodule 21, 31 in Bewegung und / oder in Schwingung versetzt werden, um eine eigenständige Reinigung des Zahnzwischenraums zu ermöglichen. Eine Bewegung der Vorrichtung selbst ist hierzu nicht erforderlich. Durch den über die Trichter 23, 33 definierten großen Arbeitsbereich ist so eine dreidimensionale Reinigung des Zahnzwischenraumes und entlang der Zahnhälse ermöglicht.

In einer Weiterbildung kann die Vorrichtung zusätzlich mit einer Düse versehen sein, welche parallel zur Hülse 24 angeordnet ist und die über eine Pumpe mit einem Spülbehälter verbunden ist. Auf diese Weise kann der Reinigungsvorgang durch einen gerichteten Spülmittelstrahl weiter verbessert werden.

## Patentansprüche

1. Vorrichtung zur Reinigung von Zahnzwischenräumen, umfassend ein Gehäuse zur Aufnahme eines Zahnseidespenders, zwei zangenartig zueinander ausgebildete Führungsarme, durch welche die Zahnseide des Zahnseidespenders transportierbar ist sowie ein Fördermodul, mittels dessen die Zahnseide durch einen Führungsarm in Richtung des gegenüberliegend angeordneten Führungsarm förderbar ist, wobei in dem gegenüberliegenden Führungsarm Greifmittel zur Entgegennahme und Fixierung der Zahnseide angeordnet ist, wobei das Fördermodul (21) wenigstens zwei beidseitig der zu fördernden Zahnseide (41) angeordnete, gegeneinander pressbare Rollen (22) umfasst, von denen wenigstens eine Rolle (22) antreibbar ist, **dadurch gekennzeichnet, dass** das Fördermodul (21) auf wenigstens zwei Achsen verfahrbar ist.

2. Vorrichtung nach Anspruch 1, **dadurch gekennzeichnet, dass** das Greifmittel durch ein zweites Fördermodul (31) gebildet ist, welches wenigstens zwei beidseitig der zu fördernden Zahnseide (41) angeordnete und gegeneinander pressbare Rollen (32) aufweist.

3. Vorrichtung nach Anspruch 2, **dadurch gekennzeichnet, dass** das zweite Fördermodul (32) auf wenigstens zwei Achsen verfahrbar ist.

4. Vorrichtung nach einem der vorgenannten Ansprüche, **dadurch gekennzeichnet, dass** wenigstens ein Fördermodul (21, 31) mit einem Schwingungserzeuger (210, 310) verbunden ist, mittels dessen es auf wenigstens einer Achse, vorzugsweise auf einer horizontalen und einer zu dieser orthogonalen vertikalen Achse, oszillierbar ist.

5. Vorrichtung nach einem der vorgenannten Ansprüche, **dadurch gekennzeichnet, dass** die Führungsarme (2, 3) endseitig in einen nach außen sich öffnenden Trichter (23, 33) übergehen.

6. Vorrichtung nach Anspruch 5, **dadurch gekennzeichnet, dass** die Trichter (23, 33) derart dimensioniert sind, dass sie zwei nebeneinander angeordnete Schneidezähne in ihrer Breite etwa hälftig überdecken.

7. Vorrichtung nach Anspruch 5 oder 6, **dadurch gekennzeichnet, dass** wenigstens ein Trichter (23, 33) mit einer elastischen Andruckschicht versehen ist.

8. Vorrichtung nach einem der vorgenannten Ansprüche, **dadurch gekennzeichnet, dass** an wenigstens einem Fördermodul (21, 31) eine Hülse (24, 34) zur Durchführung der Zahnseide (41) aufweist.

9. Vorrichtung nach Anspruch 8, **dadurch gekennzeichnet, dass** endseitig an der Hülse (24, 34) ein Führungskegel (25, 35) angeordnet ist, durch den die Zahnseide (41) geführt ist.

10. Vorrichtung nach einem der vorgenannten Ansprüche, **dadurch gekennzeichnet, dass** wenigstens ein Fördermodul (21, 31) mit einer Steuerung (7) verbunden ist, über welche des Fördermodul (21, 31) entlang definierter Bahnen bewegbar ist.

11. Vorrichtung nach Anspruch 10, **dadurch gekennzeichnet, dass** die Steuerung mit einer Speichereinheit (71) verbunden ist, in der verschiedene Bewegungsabläufe speicherbar sind.

12. Vorrichtung nach Anspruch 11, **dadurch gekennzeichnet, dass** an dem Gehäuse (1) eine Bedieneinheit (72) zur Auswahl eines Bewegungsablaufs angeordnet ist.

13. Vorrichtung nach einem der vorgenannten Ansprüche, **dadurch gekennzeichnet, dass** in einem Führungsarm (2) dem Fördermodul (21) vorgeschaltet ein Bündelmodul (6) zur partiellen Versteifung der Zahnseide (41) angeordnet ist.

14. Vorrichtung nach Anspruch 13, **dadurch gekennzeichnet, dass** das Bündelmodul (6) zur Versteifung der Zahnseide (41) zwei diametral zueinander angeordnete Schwämme zur Aufnahme von Bündelflüssigkeit umfasst, welche in Abhängigkeit von der Fördergeschwindigkeit der Zahnseide (41) gegeneinander pressbar sind.

15. Vorrichtung nach einem der Ansprüche 10 bis 14 **dadurch gekennzeichnet, dass** hinter dem Greifmittel ein Sensor zur Detektion eines aufgenommenen Zahnseideendes (41) angeordnet ist, der mit der Steuereinheit verbunden ist.

## Claims

1. Device for cleaning spaces between teeth, comprising a housing for holding a dispenser for dental floss, two guiding arms formed like tongs in relation to one another, through which the dental floss is transported from the dispenser, and a transporting module, by means of which the dental floss is transported through one guiding arm towards the opposite guiding arm, where a gripping device is arranged in the opposite guiding arm to receive and fix the dental floss in position, where the transporting module (21) comprises at least two rollers (22) which can be pressed against one another arranged on either side of the dental floss (41) being transported, of which at least one roller (22) is driven, **characterised in that** the transporting module (21) is movable on at least two axes.

2. Device in accordance with claim 1, **characterised in that** the gripping device is formed by a second transporting module (31), which has at least two rollers (32) which can be pressed against one another arranged on either side of the dental floss (41) being transported.

3. Device in accordance with claim 2, **characterised in that** the second transporting module (31) is movable on at least two axes.

4. Device in accordance with any of the preceding claims, **characterised in that** at least one of the transporting modules (21, 31) is connected to a vibration generator (210, 310), by means of which it can be oscillated on at least one axis, preferably on a horizontal axis and on an axis orthogonally perpendicular to it.

5. Device in accordance with any of the preceding claims, **characterised in that** the guiding arms (2, 3) merge into an outwardly opening funnel (23, 33) at their ends.

6. Device in accordance with claim 5, **characterised in that** the funnels (23, 33) are of such a size that they cover approximately half the width of two adjacent incisor teeth.

7. Device in accordance with claim 5 or claim 6, **characterised in that** at least one funnel (23, 33) has an elastic pressure coating.

8. Device in accordance with any of the preceding claims, **characterised in that** at least one transporting module (21, 31) is fitted with a sleeve (24, 34) through which the dental floss (41) is guided.

9. Device in accordance with claim 8, **characterised in that** a guide cone (25, 35) is arranged at the end of the sleeve (24, 34) through which the dental floss (41) is guided.

10. Device in accordance with any of the preceding claims, **characterised in that** at least one transporting module (21, 31) is connected to a control system (7), by means of which the transporting module (21, 31) can be moved along defined paths.

11. Device in accordance with claim 10, **characterised in that** the control system is connected to a memory unit (71) in which various sequences of motion can be stored.

12. Device in accordance with claim 11, **characterised in that** an operating unit (72) for selecting a sequence of motion is arranged on the housing (1).

13. Device in accordance with any of the preceding claims, **characterised in that** a bundling module (6) for partially tensioning the dental floss (41) is located in a guiding arm (2) prior to the transporting module (21).

14. Device in accordance with claim 13, **characterised in that** the bundling module (6) for tensioning the dental floss (41) comprises two sponges arranged diametrically opposite one another to absorb a bundling fluid, which sponges can be pressed against one another depending on the speed of transport of the dental floss (41).

15. Device in accordance with any of the claims 10 to 14, **characterised in that** a sensor for detecting the presence of a gripped end of the dental floss (41) is located behind the gripping device, and is connected to the control unit.

## Revendications

1. Dispositif de nettoyage d'espaces inter-dentaires, comprenant un boîtier recevant un distributeur de fil dentaire, deux bras de guidage en forme de pince configurés se regardant, par lesquels est transportable le fil du distributeur de fil dentaire, ainsi qu'un module convoyeur à l'aide duquel le fil dentaire est convoyable par un bras de guidage en direction du bras de guidage agencé en face, sachant que dans le bras de guidage situé en face est agencé un moyen de saisie servant à recevoir et immobiliser le fil dentaire, sachant que le module convoyeur (21) comprend au moins deux galets (22) agencés des deux côtés du fil dentaire (41) à convoyer et pouvant être pressés l'un contre l'autre, galets dont au moins un (22) est entraînable, **caractérisé en ce que** le module convoyeur (21) est déplaçable selon au moins deux axes.

2. Dispositif selon la revendication 1, **caractérisé en ce que** le moyen de saisie est formé par un deuxième module convoyeur (31) qui présente au moins deux galets (32) agencés des deux côtés du fil dentaire (41) à convoyer et pouvant être pressés l'un contre l'autre.

3. Dispositif selon la revendication 2, **caractérisé en ce que** le deuxième module convoyeur (32) est déplaçable selon au moins deux axes.

4. Dispositif selon l'une des revendications précédentes, **caractérisé en ce qu'**au moins un module convoyeur (21, 31) est relié à un générateur de vibrations (210, 310) à l'aide duquel il est possible de le faire osciller selon au moins un axe, de préférence selon un axe horizontal et selon un axe vertical perpendiculaire au précédent.

5. Dispositif selon l'une des revendications précédentes, **caractérisé en ce que** les bras de guidage (2, 3) deviennent à leur extrémité un entonnoir (23, 33) allant en s'évasant vers l'extérieur.

6. Dispositif selon la revendication 5, **caractérisé en ce que** les entonnoirs (23, 33) sont dimensionnés de manière à recouvrir environ la moitié de la largeur de deux incisives juxtaposées.

7. Dispositif selon la revendication 5 ou 6, **caractérisé en ce qu'**au moins un entonnoir (22, 23) est doté d'une couche d'applique élastique.

8. Dispositif selon l'une des revendications précédentes, **caractérisé en ce qu'**au moins un module convoyeur (21, 31) présente une douille (24, 34) servant à faire passer le fil dentaire (41).

9. Dispositif selon la revendication 8, **caractérisé en ce qu'**à l'extrémité de la douille (24, 34) est agencé un cône de guidage (25, 35) par lequel est guidé le fil dentaire (41).

10. Dispositif selon l'une des revendications précédentes, **caractérisé en ce qu'**au moins un module convoyeur (21, 31) est relié à une commande (7) via laquelle le module convoyeur (21, 31) est déplaçable le long d'itinéraires définis.

11. Dispositif selon la revendication 10, **caractérisé en ce que** la commande est reliée à une unité mémoire (71) dans laquelle plusieurs schémas de déplacement sont mémorisables.

12. Dispositif selon la revendication 11, **caractérisé en ce que** sur le boîtier (1) est agencé une unité de commande (72) servant à choisir un schéma de déplacement.

13. Dispositif selon l'une des revendications précédentes, **caractérisé en ce que** dans un bras de guidage (2), un module de concentration (6) est agencé en amont du module convoyeur (21) afin de rigidifier partiellement le fil dentaire (41).

14. Dispositif selon la revendication 13, **caractérisé en ce que** le module de concentration (6) comprend deux éponges diamétralement opposées, recevant le liquide de concentration, destinées à rigidifier le fil dentaire (41), éponges qu'il est possible de presser l'une contre l'autre en fonction de la vitesse de convoyage du fil dentaire (41).

15. Dispositif selon l'une des revendications 10 à 14, **caractérisé en ce que** derrière le moyen de saisie est agencé un capteur qui est relié à l'unité de commande et qui sert à détecter une extrémité de fil dentaire (41) reçue.
